(19) Europäisches Patentamt / European Patent Office / Office européen des brevets

(11) **EP 3 628 175 A1**

(12) # DEMANDE DE BREVET EUROPEEN

(43) Date de publication:
**01.04.2020 Bulletin 2020/14**

(21) Numéro de dépôt: **19199585.1**

(22) Date de dépôt: **25.09.2019**

(51) Int Cl.:
**A23L 29/256** (2016.01) **A23L 19/00** (2016.01)
**A23L 27/60** (2016.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **25.09.2018 FR 1858708**

(71) Demandeur: **Amadeite SAS**
**56580 Brehan (FR)**

(72) Inventeurs:
• DA CRUZ, Tony
  56120 LES FORGES (FR)
• REHEL, Marvin
  22210 LE CHEZE (FR)
• BALUSSON, Hervé
  56580 BREHAN (FR)

(74) Mandataire: **Vidon Brevets & Stratégie**
**16B, rue de Jouanet**
**BP 90333**
**35703 Rennes Cedex 7 (FR)**

(54) **INGRÉDIENT ALIMENTAIRE COMPRENANT UN MARC D'ULVA SP, SON UTILISATION POUR TEXTURER LES PRODUITS ALIMENTAIRES, ET PRODUITS ALIMENTAIRES LE COMPRENANT**

(57) Ingrédient alimentaire pour incorporation dans les compositions alimentaires comprenant un marc *d'Ulva sp* et optionnellement des fibres végétales, ainsi qu'un procédé d'obtention dudit marc *d'Ulva sp.* La présente invention concerne également une composition alimentaire comprenant cet ingrédient alimentaire ; l'utilisation de cet ingrédient alimentaire pour améliorer la texture des compositions alimentaires le comprenant ; l'utilisation de cet ingrédient alimentaire pour améliorer la stabilité en limitant le déphasage des compositions alimentaires le comprenant. L'extrait *d'Ulva sp* présente des propriétés rhéologiques, c'est à dire texturantes, satisfaisantes et une innocuité démontrée pour son utilisation dans l'alimentation humaine.

EP 3 628 175 A1

**Description**

DOMAINE DE L'INVENTION

La présente invention concerne un ingrédient alimentaire pour incorporation dans les compositions alimentaires comprenant un marc *d'Ulva sp* et optionnellement des fibres végétales. La présente invention concerne également une composition alimentaire comprenant cet ingrédient alimentaire, l'utilisation de cet ingrédient alimentaire pour améliorer la texture des compositions alimentaires le comprenant, l'utilisation de cet ingrédient alimentaire pour améliorer la rétention d'eau et la stabilité des compositions alimentaires le comprenant.

En effet, il a été démontré que ledit ingrédient alimentaire présente des propriétés rhéologiques, c'est à dire texturantes, ainsi que des propriétés stabilisantes satisfaisantes et une innocuité démontrée pour son utilisation dans l'alimentation humaine.

ART ANTERIEUR

Depuis des décennies, les produits issus de l'industrie agro-alimentaire, ou produits alimentaires industriels tels que sauce, soupes, produits de boulangerie, produits retexturés ou reconstitués, sont devenus des incontournables de nos repas quotidiens.

Ces produits alimentaires sont fabriqués à partir de composés naturels de base comme par exemple des légumes, des fruits et/ou de la viande.

Depuis plusieurs années, on assiste à une véritable prise de conscience collective sur l'importance de ce que l'on mange et de l'impact qu'a notre alimentation sur notre santé.

Les consommateurs se tournent aujourd'hui vers des produits perçus comme plus sains et répondants à de nouvelles attentes : produits sans allergènes, produits ingrédients d'origine animale, produits plus naturels. Ces attentes peuvent être en lien avec de nouveaux régimes alimentaires tel que le végétarisme, végétalisme, ou encore flexitarisme. Ces attentes constituent un vrai défi pour les acteurs du secteur agro-alimentaire notamment dans le développement de nouveaux ingrédients alimentaires naturels.

Ainsi, pour ce qui concerne les produits alimentaires industriels, les consommateurs sont à la recherche de produits comprenant - outre les composés de base - des ingrédients naturels. En particulier, les consommateurs sont à la recherche de produits alimentaires industriels comprenant - outre les composés de base - des ingrédients naturels, en complément ou en remplacement des texturants alimentaires usuels. Ces texturants alimentaires issus d'ingrédients alimentaires naturels doivent avoir de bonnes propriétés rhéologiques, c'est-à-dire texturantes, stables dans le temps, et avoir une innocuité démontrée. En outre, ces texturants alimentaires naturels doivent préserver les propriétés organoleptiques des produits les contenant.

OBJECTIFS DE L'INVENTION

La présente invention a pour objectif, dans au moins un mode de réalisation, la fourniture d'un ingrédient alimentaire d'origine naturelle, pour incorporation dans les compositions alimentaires, notamment les compositions alimentaires industrielles, comme par exemple des sauces, soupes, produits de boulangerie, produits retexturés ou reconstitués dont steaks, fallafels.

La présente invention a également pour objectif, dans au moins un mode de réalisation, la fourniture d'un ingrédient alimentaire d'origine naturelle, pour incorporation dans les compositions alimentaires, dont l'innocuité pour la consommation humaine, est démontrée.

La présente invention a également pour objectif, dans au moins un mode de réalisation, la fourniture d'un ingrédient alimentaire d'origine naturelle préservant les propriétés organoleptiques des produits alimentaires industriels le comprenant.

La présente invention a également pour objectif, dans au moins un mode de réalisation, la fourniture d'un ingrédient alimentaire d'origine naturelle pour incorporation dans les compositions alimentaires améliorant les propriétés rhéologiques des produits alimentaires industriels le comprenant.

La présente invention a également pour objectif, dans au moins un mode de réalisation, la fourniture d'un ingrédient alimentaire d'origine naturelle pour incorporation dans les compositions alimentaires améliorant la stabilité en limitant le déphasage des produits alimentaires industriels le comprenant.

DESCRIPTION DE L'INVENTION

Selon un premier aspect, la présente invention concerne un ingrédient alimentaire comprenant un marc d'algue marine *Ulva sp,* ledit marc d'algue étant un résidu solide obtenu par traitement mécanique, préférentiellement suivi par un traitement chimique, et/ou thermique d'algue marine *Ulva sp.* Cet ingrédient alimentaire est destiné à être incorporé à des compositions alimentaires.

En particulier, cet ingrédient alimentaire comprend de 10% à 95% dudit marc d'algue marine *Ulva sp* par poids total de l'ingrédient alimentaire.

Selon un autre mode de réalisation, cet ingrédient alimentaire comprend en outre des fibres végétales.

Selon un autre mode particulier de l'invention, cet ingrédient alimentaire comprend de 5% à 90% de fibres végétales par poids total de l'ingrédient.

Préférentiellement, les fibres végétales sont des fibres végétales insolubles.

En particulier, ces fibres végétales insolubles sont choisies parmi le groupe consistant en les fibres de pois, les fibres de pommes, les fibres de citron, les fibres d'orange, les fibres de pommes de terre, les fibres de carottes, les fibres de graines de coton, les fibres de tomates, les fibres de betteraves, les fibres de soja, les fibres d'avoines, fibres de blé, fibres de bambou ou leurs mélanges.

Cet ingrédient alimentaire est dépourvu de toute algue marine ou ses extraits, autre que le marc *d'Ulva sp.*

Selon un deuxième aspect, la présente invention concerne un ingrédient alimentaire comprenant du marc d'*Ulva sp* et optionnellement des fibres végétales, ledit marc d'*Ulva sp* étant obtenu à partir du procédé comprenant au moins une des étapes ou combinaisons des étapes suivantes :

- l'acidification des algues broyées et dessablées à un pH inférieur à 4, préférentiellement à pH inférieur à 2, très préférentiellement à pH inférieur à 1 avec un acide;
- le traitement thermique des algues broyées acidifiées entre 30°C et 100°C, préférentiellement entre 40°C et 80°C, très préférentiellement entre 50°C et 70°C, préférentiellement pendant environ 3h;
- la séparation de la phase solide formant le marc d'algue Ulva sp de la phase liquide et récupération du marc d'algue Ulva sp ;
- le pressage dudit marc d'algue Ulva sp.

Selon un aspect particulier de l'invention, le marc d'*Ulva sp* étant obtenu à partir du procédé décrit précédemment, ce procédé comprenant en outre les étapes suivantes :

- la fourniture d'algues *Ulva sp* sous forme fraiche, sèche ou congelée ;
- le lavage et le dessablage des algues ;
- le broyage des algues lavées et dessablées ;
- la neutralisation du marc, préférentiellement à un pH d'environ 7 ;
- le rinçage du marc neutralisé ;
- le séchage du marc rincé, préférentiellement entre 40 et 80°C, préférentiellement entre 50 et 70°C, très préférentiellement à 60°C ; et
- le broyage du marc.

Selon un troisième aspect, la présente invention concerne une composition alimentaire comprenant entre 0,5 à 4% dudit ingrédient alimentaire décrit précédemment.

Selon un mode de réalisation particulier, ladite composition alimentaire est choisie parmi le groupe consistant en les sauces, les soupes, les produits de boulangerie, les produits retexturés ou les produites reconstitués, les produits laitiers, les boissons.

Selon un quatrième aspect, la présente invention concerne l'utilisation dudit ingrédient alimentaire pour améliorer les propriétés texturantes de compositions alimentaires les comprenant.

Selon un cinquième aspect, la présente invention concerne l'utilisation dudit ingrédient alimentaire pour améliorer la stabilité en limitant le déphasage des compositions alimentaire les comprenant.

Par « marc d'algue marine *Ulva sp* » on entend résidu solide obtenu par le pressage d'algue marine *Ulva sp.* Plus précisément, le marc d'algue correspond à la fraction solide insoluble restant après broyage, acidification, traitement thermique et pressage des algues marines. En d'autres termes, le marc d'algue *Ulva sp* étant un résidu solide obtenu par traitement mécanique qui peut être suivi par un traitement chimique, et/ou thermique d'algue marine *Ulva sp.* En d'autres termes, pour obtenir un marc d'algue il faut au moins une étape mécanique de séparation de phases liquide/solide. Le marc d'algue obtenu peut être utilisé comme tel, mais les traitements chimiques, et notamment acide, et thermique augmentent la capacité de rétention d'eau du marc d'algue.

Les expressions « marc d'algue(s) » et « fibre d'algue(s) » sont interchangeables.

Dans la présente invention, les expressions « produits alimentaires industriels » et « compositions alimentaires » sont interchangeables.

Par « ingrédient alimentaire » selon l'invention, on entend un mélange d'agents d'origine naturelle.

Les inventeurs ont mis en avant de manière inattendue que le marc d'*Ulva sp,* optionnellement en combinaison avec des fibres végétales, présentait des propriétés texturantes et stabilisantes, notamment dans les produits alimentaires, notamment dans une sauce tomate, tout à fait satisfaisantes. En effet, l'industrie agro-alimentaire est à la recherche de nouvelles solutions pour remplacer les texturants alimentaires de synthèse ou d'origine animale, sans altérer la tenue, l'aspect ou encore les propriétés organoleptiques (par exemple le goût et l'odeur) du produit alimentaire. Or, au vu des tests pratiqués et rapportés ci-contre, les inventeurs ont démontré que d'une part le marc d'*Ulva sp* - qui est un produit d'origine naturel - présente des propriétés de rétention d'eau satisfaisantes. En particulier, il est mis en évidence qu'un marc *d'Ulva sp* obtenu après un procédé particulier présente une plus grande capacité à retenir l'eau. En outre, les inventeurs ont démontré que l'ingrédient alimentaire comprenant du marc d'*Ulva sp* améliore les propriétés texturantes, notamment en réduisant la synérèse, de manière significative. En cela, l'ingrédient alimentaire comprenant du marc d'*Ulva sp* représente un substitut ou un complément aux ingrédients alimentaires, notamment les texturants alimentaires, utilisés de manière usuelle dans les produits alimentaires.

## Marc d'*Ulva sp.*

L'ingrédient alimentaire comprend notamment un marc d'*Ulva sp.*

*Ulva sp* sont également dénommées Ulves et correspondent aux algues vertes regroupées dans le genre *Ulva.* Selon la base de données AlgaeBase, la classification de ces algues est la suivante : *Eukaryota* (domaine), *Plantae* (règne), *Viridiplantae* (sous-règne), *Chlorophyta* (infra-règne), *Chlorophyta* (embranchement), *Tetraphytina* (sous-embranchement), *Ulvophyceae* (classe), *Ulvales* (ordre, *ulvaceae* (famille), *Ulva* (genre). Le genre Ulva intègre aujourd'hui deux morphotypes, la morphotype feuille, communément appelés de laitues de mers, et la morphotype tube, communément appelé Ulve en tube. Ce morphotype était classifié dans le genre Enteromorpha jusqu'en 2003 (Hayden et al). De nombreuses sous espèces ont été répertoriés pour les deux morphotypes le plus connu pour le morphotype feuille étant *Ulva lactuca* et pour le morphotype tube *Ulva intestinalis.* La présente invention concerne uniquement les algues du genre *Ulva,* et leurs extraits, qui sont comestibles et dont l'innocuité en alimentation humaine est démontrée.

En particulier, l'ingrédient alimentaire selon l'invention comprend entre 10% à 100%, préférentiellement entre 40% et 100%, très préférentiellement entre 60 et 100% d'un marc d'algue marine *Ulva sp* par poids total de l'ingrédient alimentaire. De manière alternative, l'ingrédient alimentaire selon l'invention comprend entre 10% à 95%, préférentiellement entre 40% et 95%, très préférentiellement entre 60 et 95% d'un marc d'algue marine *Ulva sp* par poids total de l'ingrédient alimentaire.

## Fibres végétales

L'ingrédient alimentaire comprend en outre des fibres végétales provenant d'un végétal ou d'une combinaison de différents végétaux comme par exemple des légumes, légumineuses, céréales ou fruits. Les fibres végétales sont des substances résiduelles provenant de la paroi cellulaire ou du cytoplasme des végétaux, constituées de mélanges complexes de glucides. On les trouve exclusivement dans les aliments végétaux, comme par exemple les fruits, les céréales, les légumes comme par exemple la carotte, les légumineuses comme par exemple le pois.

Différentes fibres insolubles de fruits, légumes ou céréales sont commercialisées en tant qu'ingrédient alimentaire aux propriétés texturantes et incorporé dans différents types de produits finis. Ces fibres sont généralement des coproduits issus de procédés industriels (coproduit de l'industrie de jus pour les pulpes d'agrumes, coproduit de l'industrie sucrière pour les pulpes de betterave sucrière par exemple). L'une des caractéristique principale et marqueur de l'efficacité du produit est la rétention d'eau (water holding capacity ou WHC) des fibres végétales.

L'intérêt de ces produits est de pouvoir remplacer, partiellement ou en totalité, des ingrédients texturants tel que amidons, gommes, gélifiants et permettre une déclaration d'ingrédient plus attrayante pour le consommateur comme par exemple : « fibre de... », « pulpe de ... ».

En particulier, l'ingrédient alimentaire selon l'invention comprend de 0% à 90%, préférentiellement de 0% à 60%, très préférentiellement 0 à 40% de fibres végétales par poids total de l'ingrédient alimentaire. De manière alternative, l'ingrédient alimentaire selon l'invention comprend de 5% à 90%, préférentiellement de 5% à 60%, très préférentiellement 5 à 40% de fibres végétales par poids total de l'ingrédient alimentaire.

## Procédé d'obtention d'un marc d'*Ulva sp.*

L'extrait d'*Ulva sp* est préférentiellement un extrait aqueux ou sec.

Ledit marc d'*Ulva sp* peut être obtenu par un procédé, comprenant au moins une des étapes ou combinaisons d'étapes suivantes :

d) l'acidification des algues broyées et dessablées à un pH inférieur à 4, préférentiellement à pH inférieur à 2, très préférentiellement à pH inférieur à 1 avec un acide ; l'acide étant choisi parmi le groupe suivant : acide lactique, acide citrique, acide chlorhydrique.

e) le traitement thermique des algues broyées acidifiées entre 30°C et 100°C, préférentiellement entre 40°C et 80°C, très préférentiellement entre 50°C et 70°C préférentiellement pendant environ 3h;

f) la séparation de la phase solide formant le marc d'algue *Ulva sp* de la phase liquide et récupération du marc d'algue *Ulva sp*;

g) le pressage dudit marc d'algue *Ulva sp;*)

Préférentiellement, ledit marc d'*Ulva sp* peut être obtenu par un procédé comprenant une combinaison des étapes précédentes et comprend en outre les étapes suivantes :

a) la fourniture d'algues *Ulva sp* sous forme fraiche, sèche ou congelée ;

b) le lavage et le dessablage des algues ;

c) le broyage des algues lavées et dessablées ;

h) la neutralisation du marc, préférentiellement à un pH d'environ 7. Cette étape de neutralisation se fait par utilisation de la soude, ou bien par utilisation de bicarbonate de soude ;

i) le rinçage du marc neutralisé ;

j) le séchage du marc rincé, préférentiellement entre 40 et 80°C, préférentiellement entre 50 et 70°C, très préférentiellement à 60°C. Un séchage à une température comprise entre 40°C et 80°C permet d'obtenir une fibre de meilleure qualité. À partir de 80°C, il a été constaté que le taux de rétention d'eau commence à diminuer, vraisemblablement du fait d'une modification de structure de la fibre d'algue *Ulva sp* suite au séchage. ; et

k) le broyage du marc.

Le marc d'algue marine *Ulva sp* est ensuite optionnellement mélangé avec des fibres végétales, plus particulièrement des fibres végétales insolubles, notamment choisies parmi le groupe consistant en les fibres de pois, les fibres de pommes, les fibres de citron, les fibres d'orange, les fibres de pommes de terre, les fibres de carottes, les fibres de graines de coton, les fibres de tomates, les fibres de betteraves, les fibres de soja, les fibres d'avoines, les fibres de blé, les fibres de bambou ou leurs mélanges. Aucune autre algue marine ou ses extraits n'est ajoutée à cet ingrédient alimentaire.

Par la suite, l'ingrédient alimentaire est incorporé à une composition alimentaire entre 0,5% et 4% du poids total de ladite compositions. De nombreuses compositions alimentaires peuvent incorporer cet ingrédient alimentaire notamment des compositions alimentaires choisies parmi le groupe consistant en les sauces, les soupes, les produits de boulangerie, les produits retexturés ou les produites reconstitués, comme par exemple les steaks ou fallafels.

EXEMPLE

De nombreux tests ont été réalisés afin de démontrer les propriétés texturantes d'un marc d'algue marine *Ulva sp.* En particulier, il a été montré qu'un marc d'algue marine *Ulva sp* possède des propriétés de rétention d'eau (WHC, « Water Holding Capacity » en anglais) plus élevée que d'autres fibres végétales dont les propriétés de rétention d'eau sont présentées dans le **tableau 1** ci-dessous.

**Tableau 1**

| Fibres variées | WHC(ml/g) |
|---|---|
| Fibre de pomme de terre | 9,39 |
| Fibre de carotte | 6,56 |
| Fibre d'orange | 5,02 |
| Fibre de blé | 4,69 |
| Fibre de graine de coton | 3,13 |
| Fibre de tomate | 2,98 |
| Cellulose 30 microns | 2,78 |
| Fibre de betterave | 2,68 |
| Fibre de blé 600-30 | 2,65 |
| Fibre de soja | 2,48 |

(suite)

| Fibres variées | WHC(ml/g) |
|---|---|
| Fibre d'avoine | 2,32 |

Plus particulièrement des tests ont été réalisés sur la limitation du déphase d'une sauce tomate par ledit marc d'*Ulva sp.*

Des tests ont aussi été réalisés pour démontrer les propriétés de rétention d'eau d'une farine d'*Ulva sp*, et du marc d'*Ulva sp*.

**Tableau 2 : Différence de rétention d'eau entre une farine d'algue et un marc d'algue (fibre d'algue)**

| | | | WHC (g/g) |
|---|---|---|---|
| Algue verte | *Ulva sp* | Farine | 5,03 |
| | | Marc | 7,06 |

Pour cet essai, un marc d'algue est préparé selon le procédé précédemment décrit.

Cet essai permet de mettre en avant une amélioration de la rétention d'eau du marc d'algue marine *Ulva sp* par rapport à la farine de cette même algue.

**Tableau 3 : Acidification de la purée *d'Ulva sp* pour obtention d'un marc ayant une rétention d'eau améliorée**

| | | | WHC (g/g) |
|---|---|---|---|
| Algue verte | *Ulva sp* | Farine | 4,91 |
| | | Marc | 18,10 |

Pour cet essai, une purée *d'Ulva sp* est préparée selon le procédé précédemment décrit.

Le procédé d'acidification permet d'augmenter la rétention d'eau de la fibre d'algues de façon importante.

En effet, l'utilisation d'un milieu acide et de chaleur, permet la solubilisation de la majorité des composants solubles par une hydrolyse, et l'altération des fractions de celluloses et hémicellulose. Cette altération engendre une augmentation de la surface de porosité des fibres, et facilite la pénétration et l'absorption de l'eau à l'intérieur de la matrice fibrillaire.

Ainsi, plusieurs traitements d'algue *Ulva sp* ont été réalisés en variant le pH de milieu (pH 2, 3, 9, 11, 13). Tous les essais ont subi une température de 60°C pendant 2 heures, suivi d'un ajustement à pH 7, afin que, seul le pH influence les résultats de rétention d'eau.

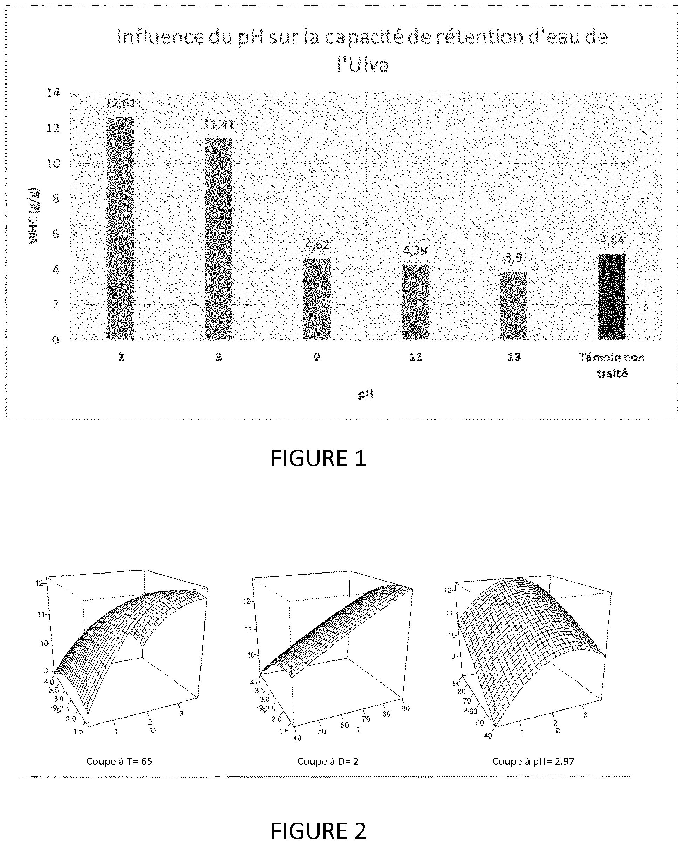

Les résultats présentés en lien avec la **figure 1** ont permis de constater les effets significatifs du pH. En effet, plus le pH est acide, plus les résultats de rétention d'eau augmentent, et inversement. A pH 2, les valeurs ont augmenté de 7.7 g d'eau/ g d'extrait, par rapport au témoin n'ayant subi aucun traitement.

Après avoir pris connaissance de l'impact du pH, il était nécessaire d'évaluer et de quantifier l'influence de chaque facteur (température, temps, pH) sur l'amélioration des capacités de rétention. Pour cela, un plan d'expérience a été réalisé. Les modalités sont présentées ci-dessous dans le **tableau 4** :

| Niveau | pH | Température (°C) | Temps (h) |
|---|---|---|---|
| -1 | 2 | 50 | 1 |
| +1 | 4 | 80 | 3 |

**Tableau 4**

Vingt-cinq essais ont été réalisés, en faisant varier les modalités suivant un plan complet à trois facteurs ($2^3$). Après analyse statistique (Student, logiciel R), les résultats ont permis d'obtenir l'équation traduisant l'impact de chaque facteur et des interactions, sur l'amélioration de la rétention d'eau :

$$Y = 3.47 + 1.03 X1 + 0.07 X2 + 3.29* X3 + 0.0006 X12 - 0.23 X13 - 0.006 X23$$

(Y : rétention d'eau, X1: pH, X2 : Température (°C), X3 : Temps (h), X12 : interaction entre le pH et la température, X13 : interaction entre le pH et le temps, X23 : interaction en la température et le temps)

Ainsi, le facteur le plus influent serait le temps, suivi du pH. La température et les interactions entre facteurs auraient peu d'impact sur l'amélioration de la rétention d'eau. D'après l'étude statistique, les conditions optimales seraient un pH de 1.8, une température de 214 °C et une durée de 1.7 heures. Les graphiques représentés en **Figure 2** permettent d'imager les résultats, et de mieux comprendre les impacts.

Ces résultats ont permis de mieux comprendre l'impact du traitement sur l'amélioration de la rétention d'eau de l'algue.

Des essais réalisés avec l'acide lactique montrent que plus le pH est faible plus la rétention d'eau est importante. Les essais réalisés avec de l'acide citrique présentés dans **le tableau 5** suivant donnent le même résultat : plus le pH est faible plus la rétention d'eau est importante.

La même tendance est observée avec d'autres acides, dont l'acide chlorhydrique.

**Tableau 5 : Effet de l'acidification sur les propriétés de rétention d'eau de la fibre d'algue *Ulva sp***

| Traitement 1 | | Traitement 2 | WHC (g eau/g d'extrait) |
|---|---|---|---|
| acide citrique pH2,8 | 1h - température ambiante | 2h - 60°c (bain marie) | 7,51 |
| | | | 9,18 |
| acide citrique pH1,8 | 1h - température ambiante | 2h - 60°c (bain marie) | 8,21 |
| | | | 7,76 |
| acide citrique pH1,2 | 1h - température ambiante | 2h - 60°c (bain marie) | 11,44 |
| | | | |

**Essais d'incorporation de marc *d'Ulva sp* dans une sauce tomate**

Les propriétés rhéologiques d'une concentration d'un marc *d'Ulva sp* a été testés et comparé avec un témoin négatif (absence de texturant alimentaire). Différentes granulométries de marc *d'Ulva sp* sont testées.

Les compositions 1 à 5 testées sont présentées dans le tableau 6 suivant :

**Tableau 6**

| | Granulométrie marc *Ulva sp* | Poudre de tomate | Marc *Ulva sp* | sucre | Sel | Vinaigre | eau |
|---|---|---|---|---|---|---|---|
| 1-témoin pas de fibre | n/a | 6% | 0% | 6,80% | 0,34% | 3,40% | 83,46% |
| 2-fibre d'algue 1 | <80μm | 6% | 2% | 6,80% | 0,34% | 3,40% | 81,71% |
| 3-fibre d'algue 2 | 80 - 125 μm | 6% | 2% | 6,80% | 0,34% | 3,40% | 81,46% |
| 4-fibre d'algue 3 | 125 - 250 μm | 6% | 2% | 6,80% | 0,34% | 3,40% | 81,46% |
| 5-fibre d'algue 4 | > 250 μm | 6% | 2% | 6,80% | 0,34% | 3,40% | 81,46% |

Une inspection visuelle démontre que l'incorporation du marc *d'Ulva sp,* aussi appelé fibre d'algue, permet d'épaissir la sauce tomate de la stabiliser en limitant son déphasage. En effet, plus la granulométrie du marc *d'Ulva sp* est élevée, plus la sauce s'épaissit.

Le marc *d'Ulva sp* permet également d'intensifier la coloration de la sauce tomate.

Dans un mode de réalisation particulier, l'ingrédient alimentaire pour incorporation dans les compositions alimentaires comprenant un marc d'algue marine *Ulva sp,* comprend également des fibres végétales, préférentiellement insolubles.

Le mélange avec d'autres fibres végétales est avantageux d'un point de vue économique, notamment à cause d'une dilution des produits, mais également à cause du co-séchage qui a un impact sur la fonctionnalité des deux fibres pendant le processus de fabrication. Le mélange de marc d'algue *Ulva sp* et de fibres végétales est également avantageux d'un point de vue organoleptique, puisqu'il permet d'obtenir un mélange de fibres plus neutre.

Il est constaté qu'il existe un effet de synergie entre les fibres d'algue *Ulva sp* et les fibres végétales. Plus particulièrement, il est estimé que la granulométrie des fibres joue un rôle dans cet effet de synergie.

Il existe également d'autres synergies tels que l'ajustement de la coulabilité du produit, de sa stabilité (réduction d'hygroscopie), pour lesquelles les fibres d'algues et de végétaux vont avoir des interactions différentes et des formes différentes.

Les différents ratios entre fibres vont être très liés avec les différentes applications. Par exemple, une teneur forte en fibre végétale permet de diminuer la couleur du mélange et ainsi obtenir un produit plus neutre obligatoire pour certaines applications. Ainsi, le taux de mélange des fibres d'algue et des fibres végétales permet d'avoir des produits plus ou moins neutres en fonction des applications.

**Revendications**

1. Ingrédient alimentaire pour incorporation dans les compositions alimentaires comprenant un marc d'algue marine *Ulva sp,* ledit marc d'algue étant un résidu solide obtenu par mécanique, préférentiellement suivi par un traitement chimique et/ou thermique d'algue marine *Ulva sp*.

2. Ingrédient alimentaire selon la revendication 1, **caractérisé en ce que** l'ingrédient comprend de 10% à 95%, d'un marc d'algue marine *Ulva sp* par poids total de l'ingrédient alimentaire.

3. Ingrédient alimentaire selon l'une quelconque des revendications précédentes, **caractérisé en ce qu'**il comprend en outre des fibres végétales.

4. Ingrédient alimentaire selon l'une quelconque des revendications précédentes **caractérisé en ce que** l'ingrédient comprend de 5% à 90% de fibres végétales par poids total de l'ingrédient alimentaire.

5. Ingrédient alimentaire selon l'une quelconque des revendications précédentes, **caractérisé en ce que** les fibres végétales sont des fibres végétales insolubles.

6. Ingrédient alimentaire selon la revendication 5, **caractérisé en ce que** les fibres végétales insolubles sont choisies parmi le groupe consistant en les fibres de pois, les fibres de pommes, les fibres de citron, les fibres d'orange, les fibres de pommes de terre, les fibres de carottes, les fibres de graines de coton, les fibres de tomates, les fibres de betteraves, les fibres de soja, les fibres d'avoines, les fibres de blé, les fibres de bambou ou leurs mélanges.

7. Ingrédient alimentaire selon l'une quelconque des revendications précédentes, **caractérisé en ce qu'**il est dépourvu de toute algue marine ou ses extraits, autre que le marc d'*Ulva sp*.

8. Ingrédient alimentaire pour incorporation dans les compositions alimentaires comprenant du marc d'algue marine *Ulva sp* et des fibres végétales,
ledit marc d'*Ulva sp* étant obtenu à partir du procédé comprenant au moins une des étapes ou combinaisons d'étapes suivantes :

   - l'acidification des algues broyées et dessablées à un pH inférieur à 4, préférentiellement à pH inférieur à 2, très préférentiellement à pH inférieur à 1 avec un acide;
   - le traitement thermique des algues broyées acidifiées entre 30°C et 100°C, préférentiellement entre 40°C et 80°C, très préférentiellement entre 50°C et 70°C, préférentiellement pendant environ 3h;
   - la séparation de la phase solide formant le marc d'algue *Ulva sp* de la phase liquide et récupération du marc d'algue *Ulva sp;*
   - le pressage dudit marc d'algue *Ulva sp* ;

9. Ingrédient alimentaire pour incorporation dans les compositions alimentaires comprenant du marc d'algue marine *Ulva sp* et des fibres végétales,
ledit marc d'*Ulva sp* étant obtenu à partir du procédé selon la revendication 8, ledit procédé comprenant en outre les étapes suivantes :

   - la fourniture d'algues *Ulva sp* sous forme fraiche, sèche ou congelée ;
   - le lavage et le dessablage des algues ;

- le broyage des algues lavées et dessablées ;
- la neutralisation du marc, préférentiellement à un pH d'environ 7 ;
- le rinçage du marc neutralisé ;
- le séchage du marc rincé, préférentiellement entre 40 et 80°C, préférentiellement entre 50 et 70°C, très préférentiellement à 60°C; et,
- le broyage du marc.

10. Composition alimentaire comprenant entre 0,5 à 4% de l'ingrédient alimentaire selon l'une quelconque des revendications 1 à 9.

11. Composition alimentaire selon la revendication 10, **caractérisé en ce que** la composition est choisie parmi le groupe consistant en les sauces, les soupes, les produits de boulangerie, les produits retexturés ou les produites reconstitués, les produits laitiers, les boissons.

12. Utilisation de l'ingrédient alimentaire selon l'une quelconque des revendications 1 à 9 pour améliorer les propriétés texturantes de compositions alimentaires les comprenant.

13. Utilisation dudit ingrédient alimentaire selon l'une quelconque des revendications 1 à 9 pour améliorer la stabilité en limitant le déphasage des compositions alimentaire les comprenant.

FIGURE 1

FIGURE 2

Europäisches
Patentamt

European
Patent Office

Office européen
des brevets

# RAPPORT DE RECHERCHE EUROPEENNE

Numéro de la demande

EP 19 19 9585

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 104 222 300 A (DAOHE BIOTECHNOLOGY CO LTD) 24 décembre 2014 (2014-12-24) * abrégé; revendication 1 * ----- | 1-9 | INV. A23L29/256 A23L19/00 A23L27/60 |
| X | CN 103 637 267 A (QINGDAO JIARUI BIOLOG TECH CO) 19 mars 2014 (2014-03-19) * alinéa [0001]; revendication 1 * ----- | 1,8-10, 12,13 | |
| X | CN 104 222 219 A (DAOHE BIOTECHNOLOGY CO LTD) 24 décembre 2014 (2014-12-24) * revendication 1 * ----- | 1,8,9, 11-13 | |
| X | CN 106 108 033 A (QINGDAO SEAWIN BIOTECH GROUP CO LTD) 16 novembre 2016 (2016-11-16) * alinéa [0002]; revendication 1 * ----- | 1,8-12 | |

DOMAINES TECHNIQUES RECHERCHES (IPC)

A23L

Le présent rapport a été établi pour toutes les revendications

| Lieu de la recherche | Date d'achèvement de la recherche | Examinateur |
|---|---|---|
| La Haye | 13 février 2020 | Villányi Kelemen, K |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 19 9585

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-02-2020

| Document brevet cité au rapport de recherche | | Date de publication | Membre(s) de la famille de brevet(s) | Date de publication |
|---|---|---|---|---|
| CN 104222300 | A | 24-12-2014 | AUCUN | |
| CN 103637267 | A | 19-03-2014 | AUCUN | |
| CN 104222219 | A | 24-12-2014 | AUCUN | |
| CN 106108033 | A | 16-11-2016 | AUCUN | |

Pour tout renseignement concernant cette annexe : voir Journal Officiel de l'Office européen des brevets, No.12/82

EPO FORM P0460